# EUROPEAN PATENT SPECIFICATION

(11) **EP 4 261 262 B1**
(45) Date of publication and mention of the grant of the patent: **09.07.2025**
(21) Application number: 21902998.0
(22) Date of filing: 12.10.2021
(51) Int. Cl.: B29C 65/48, B60C 19/00, C08J 7/04, C08J 7/12, C08J 7/043, C09J 175/04, C09J 163/00, C09J 5/02, B32B 7/12, B32B 25/04, C01B 11/04, B29C 65/00, B29L 30/00

(54) **VULCANIZED RUBBER SURFACE PROCESSING AGENT, ADHESION STRUCTURE MANUFACTURING METHOD, ADHESION STRUCTURE, AND TIRE**
VERARBEITUNGSMITTEL FÜR VULKANISIERTE KAUTSCHUKOBERFLÄCHE, HERSTELLUNGSVERFAHREN FÜR HAFTSTRUKTUR, HAFTSTRUKTUR UND REIFEN
AGENT DE TRAITEMENT DE SURFACE DE CAOUTCHOUC VULCANISÉ, PROCÉDÉ DE FABRICATION DE STRUCTURE ADHÉSIVE, STRUCTURE ADHÉSIVE ET PNEU

(30) Priority: 08.12.2020 JP 2020203692
(43) Date of publication of application: 18.10.2023
(73) Proprietor: BRIDGESTONE CORPORATION, Chuo-ku Tokyo 104-8340 (JP)
(72) Inventor: OZAKI, Takuya, Tokyo 104-8340 (JP); SUGI, Shinichiro, Tokyo 104-8340 (JP); HOJO, Masahiro, Tokyo 104-8340 (JP)
(74) Representative: Marks & Clerk LLP
(86) International application number: PCT/JP2021/037786
(87) International publication number: WO 2022/123894

(56) References cited:
- CN-C- 100 451 175
- JP-A- 2002 539 279
- JP-A- H09 221 552
- JP-A- S51 122 134
- KR-A- 20150 132 905
- US-A- 5 872 190
- US-A1- 2002 091 222
- CATALDO FRANCO ET AL: "On the early reaction stages of ozone with N,N'-substituted p-phenylenediamines (6PPD, 77PD) and N,N',N''-substituted-1,3,5-triazine "Durazone ": An electron spin resonance (ESR) and electronic absorption", POLYMER DEGRADATION AND STABILITY, vol. 111, 3 December 2014 (2014-12-03) - 3 December 2014 (2014-12-03), pages 223 - 231, XP029144485, ISSN: 0141-3910, DOI: 10.1016/J.POLYMDEGRADSTAB.2014.11.011

## Description

### TECHNICAL FIELD

This disclosure relates to a vulcanized rubber surface treatment agent, a method of producing an adhesive structure, an adhesive structure, and a tire.

### BACKGROUND

In recent years, various tires have been reused by repairing deteriorated parts, which are caused due to use of the tire, or by replacing a part of the tire, from the viewpoint of saving resources and reducing initial costs. Specific examples include retreading where a worn tread is replaced, re-siding where a portion of a sidewall that has been damaged by curbs on a sidewalk or the like is replaced, and repairing cracks that have occurred on the tire surface.

Technologies of repairing and reusing tires as described above often require adhesion between a vulcanized rubber members and another member, especially adhesion between vulcanized rubber members, which naturally requires good adhesion between the members. Further, it is important that the repaired portion of the tire should have good fatigue resistance (the ability to withstand deformation of the tire) when it is reused. Furthermore, convenience is also important during the operation such as repairing.

For example, PTL 1 (JP H01-131291 A) describes that rubber can be firmly and stably adhered to another member by applying (1) a primer mainly composed of halogenated polyolefin, (2) a rubber-based adhesive mainly composed of halogenated rubber, and (3) a urethane-based adhesive to a rubber surface in the stated order, and then sandwiching these materials between the rubber and the other member. PTL 2 relates to an adhesive for rubber compositions, a process for its preparation and articles comprising the adhesive.

### CITATION LIST

### Patent Literature

PTL 1: JP H01-131291 A
PTL 2: US 2002/091222 A1

### SUMMARY

### (Technical Problem)

The technology of PTL 1 realizes the adhesion by thermocompression bonding. Therefore, it is difficult to operate if a tire, especially a large tire, is mounted. In view of the fact that a tire is often repaired on-site, it is desirable that vulcanized rubber members can be firmly adhered to each other without heating.

Further, the prior art described in PTL 1 applies an organic solvent on the rubber surface, which may deteriorate the rubber.

Based on the above, it is desired to develop a treatment agent that provides desired specific activity when applied to a surface of vulcanized rubber.

It could thus be helpful to provide a vulcanized rubber surface treatment agent that enables firm adhesion between vulcanized rubbers without heating and has little effect on rubber deterioration.

Further, it is helpful to provide a method of producing an adhesive structure where an adhesive structure in which vulcanized rubbers are firmly adhered to each other can be produced without heating.

Furthermore, it is helpful to provide an adhesive structure with excellent fatigue resistance in which vulcanized rubbers are firmly adhered to each other, and a tire provided with the adhesive structure.

### (Solution to Problem)

### We thus provide the following

Use of the vulcanized rubber surface treatment agent of the present disclosure for adhering vulcanized rubbers to each other, the vulcanized rubber surface treatment agent of the present disclosure being
an aqueous solution of hypochlorous acid having a pH value of 2 or more and 7 or less and an effective chlorine concentration of 100 ppm or more and 13000 ppm or less.

The method of producing an adhesive structure of the present disclosure is a method of producing an adhesive structure for obtaining an adhesive structure in which a first vulcanized rubber and a second vulcanized rubber are adhered to each other, including
a first application process of applying an aqueous solution of hypochlorous acid having a pH value of 2 or more and 7 or less and an effective chlorine concentration of 100 ppm or more and 13000 ppm or less on a surface of the first vulcanized rubber,
a second application process of applying an adhesive to a surface of the aqueous solution of hypochlorous acid applied in the first application process, and
an adhesion process of adhering the first vulcanized rubber and the second vulcanized rubber to each other via the aqueous solution of hypochlorous acid applied in the first application process and the adhesive applied in the second application process.

The adhesive structure of the present disclosure is an adhesive structure produced by the method of producing an adhesive structure of the present disclosure, in which a first vulcanized rubber and a second vulcanized rubber are adhered to each other via an adhesive layer, where
the adhesive layer contains a urethane compound and/or an epoxy compound, and
at least a part of surfaces of the first vulcanized rubber and the second vulcanized rubber that are in contact with the adhesive layer is chlorinated.

The tire of the present disclosure is provided with the adhesive structure.

### (Advantageous Effect)

According to the present disclosure, it is possible to provide a vulcanized rubber surface treatment agent that enables firm adhesion between vulcanized rubbers without heating and has little effect on rubber deterioration.

Further, according to the present disclosure, it is possible to provide a method of producing an adhesive structure where an adhesive structure in which vulcanized rubbers are firmly adhered to each other can be produced without heating.

Furthermore, according to the present disclosure, it is possible to provide an adhesive structure with excellent fatigue resistance in which vulcanized rubbers are firmly adhered to each other, and a tire provided with the adhesive structure.

### DETAILED DESCRIPTION

The following describes the present disclosure in detail based on embodiments.

### (Vulcanized rubber surface treatment agent)

A vulcanized rubber surface treatment agent of one embodiment of the present disclosure (hereinafter, it may be referred to as "the surface treatment agent of the present embodiment") is used for adhering vulcanized rubbers to each other. The surface treatment agent of the present embodiment is an aqueous solution of hypochlorous acid having a pH value of 2 or more and 7 or less and an effective chlorine concentration of 100 ppm or more and 13000 ppm or less.

In the aqueous solution of hypochlorous acid having a pH value of 2 or more and 7 or less, hypochlorous acid is generally present in the form of molecules (HClO).

We have made intensive studies on methods of improving the adhesion between vulcanized rubbers. As a result, we found that good adhesion can be realized without heating by, prior to adhering vulcanized rubbers to each other using an adhesive, subjecting at least one of the vulcanized rubbers to surface treatment using an aqueous solution of hypochlorous acid. It has been known that an aqueous solution of hypochlorous acid is usually used for disinfection, deodorization, and the like. Therefore, it can be said that it is a novel and surprising discovery that adhesion between vulcanized rubbers is improved by using an aqueous solution of hypochlorous acid as a surface treatment agent of vulcanized rubber.

Because the surface treatment agent of the present embodiment is an aqueous solution (which contains no organic solvent), it has little adverse effect on the environment, and it hardly deteriorates vulcanized rubber that is in direct contact. Therefore, an adhesive structure obtained by applying the surface treatment agent of the present embodiment to a surface of vulcanized rubber and sandwiching an adhesive between vulcanized rubbers has not only high adhesiveness but also significant resistance to deformation and strain (it has good fatigue resistance).

Further, the aqueous solution of hypochlorous acid also has the advantage that it can be easily prepared using commercially available raw materials.

When the aqueous solution of hypochlorous acid is applied to the surface of the vulcanized rubber, it is considered that an oxidation (chlorination) reaction of an olefin moiety occurs in at least a part of the vulcanized rubber surface. It is considered that, in the oxidation (chlorination) reaction, a chlorine group and a hydroxyl group are introduced into a carbon atom forming a C=C double bond in a rubber molecule present on the vulcanized rubber surface by the following mechanism. Further, it is considered that the introduction of these groups increases the polarity of the vulcanized rubber surface and the wettability, which contributes to firm adhesion. Therefore, it is necessary to have a certain amount of hypochlorous acid present in the form of molecules (HClO) in the aqueous solution, because the polarity of the vulcanized rubber surface cannot be sufficiently increased if the hypochlorous acid is only present in the form of ions. Whether the hypochlorous acid in the aqueous solution is present in the form of molecules or in the form of ions can be determined from the pH value of the aqueous solution. It is believed that, when the pH value is 7 or less, there are enough hypochlorous acid molecules to increase the polarity of the vulcanized rubber surface.

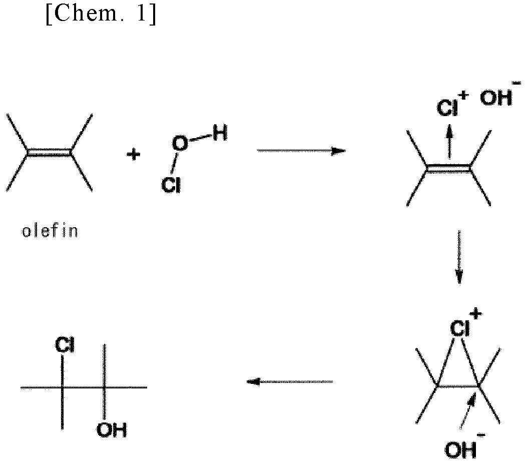

The aqueous solution of hypochlorous acid as the surface treatment agent of the present embodiment can be used in the method of producing an adhesive structure described below, for example.

The pH value of the aqueous solution of hypochlorous acid as the surface treatment agent of the present embodiment is 2 or more and 7 or less as described above. When the pH value is less than 2, a large amount of chlorine gas is released, rendering it difficult to maintain the effective chlorine concentration within the predetermined range. When the pH value is more than 7, the effect of improving the adhesion between vulcanized rubbers cannot be sufficiently obtained. Further, the pH value of the aqueous solution of hypochlorous acid is more preferably 4 or more from the viewpoint of stability.

The effective chlorine concentration of the aqueous solution of hypochlorous acid as the surface treatment agent of the present embodiment is 100 ppm or more and 13000 ppm or less as described above. When the effective chlorine concentration is less than 100 ppm, the effect of improving the adhesion between vulcanized rubbers cannot be sufficiently obtained. When the effective chlorine concentration exceeds 13000 ppm, the adhesion between vulcanized rubbers deteriorates, and there is a risk to human health. From the same point of view, the effective chlorine concentration of the aqueous solution of hypochlorous acid is preferably 200 ppm or more and more preferably 300 ppm or more. It is preferably 8000 ppm or less, more preferably 4000 ppm or less, even more preferably 1000 ppm or less, and further preferably 500 ppm or less.

The effective chlorine concentration of the aqueous solution of hypochlorous acid can be adjusted, for example, by the dilution ratio during the preparation of the aqueous solution, which is obtained by dissolving hypochlorite such as sodium hypochlorite in water.

The pH value of the aqueous solution of hypochlorous acid can be reduced, for example, by adding hydrochloric acid to the aqueous solution of hypochlorous acid, and it can be adjusted by the addition ratio of hydrochloric acid. The pH value of an aqueous solution obtained by dissolving sodium hypochlorite in water is approximately 9 to 10. If a large amount of chlorine is added to the aqueous solution of hypochlorous acid or if it is rapidly added, chlorine gas is formed, and the effective chlorine concentration is reduced accordingly, which should be noted during the adjustment.

### (Method of producing adhesive structure)

A method of producing an adhesive structure of one embodiment of the present disclosure (hereinafter, it may be referred to as "the production method of the present embodiment") is a method of producing an adhesive structure for obtaining an adhesive structure in which a first vulcanized rubber and a second vulcanized rubber are adhered to each other. Specifically, the production method of the present embodiment includes
a first application process of applying an aqueous solution of hypochlorous acid having a pH value of 2 or more and 7 or less and an effective chlorine concentration of 100 ppm or more and 13000 ppm or less on a surface of the first vulcanized rubber,
a second application process of applying an adhesive to a surface of the aqueous solution of hypochlorous acid applied in the first application process, and
an adhesion process of adhering the first vulcanized rubber and the second vulcanized rubber to each other via the aqueous solution of hypochlorous acid applied in the first application process and the adhesive applied in the second application process.

According to the production method of the present embodiment, it is possible to produce an adhesive structure in which vulcanized rubbers are firmly adhered to each other without heating. Further, the adhesive structure obtained with the production method of the present embodiment has significant resistance to deformation and strain (it has good fatigue resistance).

The vulcanized rubber (the first vulcanized rubber and the second vulcanized rubber) can be prepared by vulcanizing a rubber composition containing a rubber component. Examples of the rubber component include natural rubber, and a diene-based rubber component such as butadiene rubber, styrene-butadiene rubber, isoprene rubber, chloroprene rubber, ethylene-propylene-diene copolymer, and acrylonitrile-butadiene rubber. The rubber component may be used alone or in combination of two or more. Further, the vulcanized rubber and the rubber composition used for preparing the vulcanized rubber may, depending on the purpose, include an appropriate amount of additive such as a filler such as carbon black, a vulcanizing agent such as sulfur, a vulcanization accelerator, a vulcanization accelerating aid, zinc white, an age resistor, an antioxidant, a foaming agent, a plasticizer, a lubricant, a tackifier, and an UV absorber. The vulcanization conditions are not particularly limited.

Furthermore, the vulcanized rubber may be provided with members other than rubber, such as fiber members and metal members, depending on the purpose.

Examples of the age resistor include an aromatic secondary amine-based age resistor, a phenol-based age resistor, a sulfur-based age resistor, and a phosphite-based age resistor.

Examples of the aromatic secondary amine-based age resistor include a p-phenylenediamine-based age resistor such as N-phenyl-N'-(1,3-dimethylbutyl)-p-phenylenediamine (6PPD), N-isopropyl-N'-phenyl-p-phenylenediamine (IPPD), N,N'-diphenyl-p-phenylenediamine (DPPD), N,N'-di-2-naphthyl-p-phenylenediamine (DNPD), N-(3-methacryloyloxy-2-hydroxypropyl)-N'-phenyl-p-phenylenediamine, and N-cyclohexyl-N'-phenyl-p-phenylenediamine; a diphenylamine-based age resistor such as p-(p-toluenesulfonylamido)diphenylamine, 4,4'-bis(α,α-dimethylbenzyl)diphenylamine (CD), octylated diphenylamine (ODPA), and styrenated diphenylamine; and a naphthylamine-based age resistor such as N-phenyl-1-naphthylamine (PAN) and N-phenyl-2-naphthylamine (PBN)

The aromatic secondary amine-based age resistor is preferably a p-phenylenediamine-based age resistor. The p-phenylenediamine-based age resistor preferably has a structure having no double bond other than a phenylenediamine moiety, and it is more preferably a p-phenylenediamine-based compound represented by the following general formula (1) 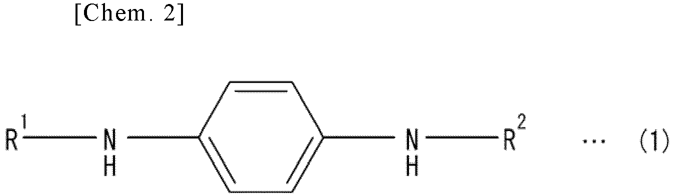 where R¹ and R² are each independently a monovalent saturated hydrocarbon group. R¹ and R² may be the same or different, but they are preferably the same from the viewpoint of synthesis.

The monovalent saturated hydrocarbon group preferably has 1 to 20 carbon atoms, more preferably 3 to 10 carbon atoms, and particularly preferably 6 and 7 carbon atoms. When the saturated hydrocarbon group has 20 or less carbon atoms, the number of moles per unit mass increases. As a result, the aging prevention effect increases, and the ozone resistance of the vulcanized rubber and/or rubber composition improves.

From the viewpoint of further improving the ozone resistance of the vulcanized rubber and/or rubber composition, R¹ and R² in the general formula (1) are preferably each independently a chain or cyclic monovalent saturated hydrocarbon group having 1 to 20 carbon atoms.

Examples of the monovalent saturated hydrocarbon group include an alkyl group and a cycloalkyl group. The alkyl group may be linear or branched, and the cycloalkyl group may be further bonded with an alkyl group or the like as a substituent.

Examples of the alkyl group include a methyl group, an ethyl group, a n-propyl group, an isopropyl group, a n-butyl group, an isobutyl group, a sec-butyl group, a tert-butyl group, a 1,2-dimethylbutyl group, a 1,3-dimethylbutyl group, a 2,3-dimethylbutyl group, a n-pentyl group, an isopentyl group, a neopentyl group, a 1-methylpentyl group, a 2-methylpentyl group, a 3-methylpentyl group, a 4-methylpentyl group, a 1,2-dimethylpentyl group, a 1,3-dimethylpentyl group, a 1,4-dimethylpentyl group, a 2,3-dimethylpentyl group, a 2,4-dimethylpentyl group, a 3,4-dimethylpentyl group, a n-hexyl group, a 1-methylhexyl group, a 2-methylhexyl group, various octyl groups, various decyl groups, and various dodecyl group. Among the above, a 1,4-dimethylpentyl group is preferred.

Examples of the cycloalkyl group include a cyclopentyl group, a methyl cyclopentyl group, a cyclohexyl group, a methyl cyclohexyl group, a cycloheptyl group, and a cyclooctyl group. Among the above, a cyclohexyl group is preferred.

The p-phenylenediamine-based compound represented by the general formula (1) may be supported on any carrier. For example, the p-phenylenediamine-based compound represented by the general formula (1) may be supported on an inorganic filler such as silica or calcium carbonate.

The p-phenylenediamine-based compound represented by the general formula (1) may form a masterbatch together with the rubber component used in the vulcanized rubber.

The p-phenylenediamine-based compound represented by the general formula (1) may be a salt of an organic acid. The organic acid used for forming the salt is not particularly limited, and examples thereof include stearic acid.

The first vulcanized rubber and the second vulcanized rubber preferably have a concentration of the aromatic secondary amine-based age resistor of 1 % by mass or less. Because the aromatic secondary amine-based age resistor may have an unintended effect on the adhesion between vulcanized rubbers, suppressing the concentration to 1 % by mass or less can maintain sufficiently good adhesion between vulcanized rubbers. The concentration of each component in the vulcanized rubber can usually be calculated from the chemical composition (blending ratio) of the rubber composition used to prepare the vulcanized rubber.

However, because the adhesion is performed on the surface of the vulcanized rubber, the above-described concentration should be satisfied at least in the surface layer of the vulcanized rubber. Specifically, the first vulcanized rubber and the second vulcanized rubber preferably have a concentration of the aromatic secondary amine-based age resistor of 1 % by mass or less in a region of a depth of 10 µm from the surface in contact with the adhesive (in the subsequent adhesion process).

The concentration in the region of a depth of 10 µm from the surface of the vulcanized rubber can be measured, for example, by gas chromatography of a wipe sample of the surface.

The concentration of the aromatic secondary amine-based age resistor in the surface layer of the vulcanized rubber can be reduced, for example, by treating the surface of the vulcanized rubber with an organic solvent such as acetone (for example, wiping the surface with a waste cloth impregnated with the solvent or the like).

From the same point of view, the concentration of the aromatic secondary amine-based age resistor in the first vulcanized rubber and the second vulcanized rubber (or their surface layers) is more preferably 0.6 % by mass or less and still more preferably 0.3 % by mass or less, and it may be 0 % by mass.

The first vulcanized rubber and the second vulcanized rubber may be vulcanized rubber members independent of each other, or they may be parts positioned at any two locations in one vulcanized rubber member. Further, the first vulcanized rubber and the second vulcanized rubber may be the same or different in terms of rubber type, member shape, and content of various additives.

In the first application process, an aqueous solution of hypochlorous acid having a pH value of 2 or more and 7 or less and an effective chlorine concentration of 100 ppm or more and 13000 ppm or less is applied on the surface of the first vulcanized rubber. In the process, the adhesion surface of the vulcanized rubber is treated with an (organic solvent-free) aqueous solution, which sufficiently suppresses the deterioration of the rubber. The amount applied is not particularly limited, and it may be an amount so as to cover the surface to be adhered. The application method is not particularly limited.

The aqueous solution of hypochlorous acid used in the first application process preferably has a pH value of 4 or more and 7 or less from the viewpoint of stability.

In the production method of the present embodiment, it is preferable to apply the aqueous solution of hypochlorous acid to the surface of the second vulcanized rubber as with the first vulcanized rubber.

Next, in the second application process, an adhesive is applied to the surface of the aqueous solution of hypochlorous acid applied in the first application process. The amount applied is not particularly limited, and it may be an amount so as to cover the aqueous solution of hypochlorous acid on the surface of the first vulcanized rubber. The application method is not particularly limited.

The adhesive is not particularly limited and can be appropriately selected depending on the purpose. The adhesive may be used alone or in combination of two or more. Particularly, it is preferable to use an adhesive that can realize adhesion at room temperature as the adhesive. Further, from the viewpoint of realizing sufficiently good adhesion, it is preferable to use a urethane-based adhesive and/or an epoxy-based adhesive as the adhesive. In this case, the vulcanized rubbers can be adhered to each other more firmly.

Next, in the adhesion process, the first vulcanized rubber and the second vulcanized rubber are adhered to each other via the aqueous solution of hypochlorous acid applied in the first application process and the adhesive applied in the second application process. As a result, an adhesive structure in which two vulcanized rubbers are firmly adhered to each other can be obtained. More specifically, in the adhesion process, the first vulcanized rubber and the second vulcanized rubber can be adhered to each other by bonding them together via the applied material and applying pressure as appropriate. When the application is performed to both the first vulcanized rubber and the second vulcanized rubber, the applied surfaces of both the vulcanized rubbers may be bonded together so as to face each other.

After bonding the first vulcanized rubber and the second vulcanized rubber together, it is preferable to perform drying to remove moisture in the aqueous solution of hypochlorous acid. In this case, the drying temperature may be room temperature. The drying time may be, for example, about 2 to 7 days.

An adhesive structure in which the first vulcanized rubber and the second vulcanized rubber are adhered to each other can be obtained with the processes described above.

In the production method of the present embodiment, a polishing process may be performed in advance in which the adhesive surfaces of the first vulcanized rubber and the second vulcanized rubber are polished with a whetstone or the like. In this case, the adhesion can be further improved by the anchor effect.

In the production method of the present embodiment, a process may be performed in advance in which the surfaces of the first vulcanized rubber and the second vulcanized rubber to be adhered are treated with an organic solvent such as acetone to reduce the concentration of the predetermined component (such as the aromatic secondary amine-based age resistor) in the surface layer. This process is especially useful when the concentration of the aromatic secondary amine-based age resistor in the rubber composition used for preparing the vulcanized rubber is relatively high.

### (Adhesive structure)

An adhesive structure according to one embodiment of the present disclosure (hereinafter, it may be referred to as "the adhesive structure of the present embodiment") is an adhesive structure in which a first vulcanized rubber and a second vulcanized rubber are adhered to each other via an adhesive layer, where
the adhesive layer contains a urethane compound and/or an epoxy compound, and
at least a part of surfaces of the first vulcanized rubber and the second vulcanized rubber that are in contact with the adhesive layer is chlorinated. The adhesive structure of the present embodiment has excellent fatigue resistance, in which vulcanized rubbers are firmly adhered to each other.

The adhesive structure of the present embodiment is suitably produced with the production method of the present embodiment described above. Further, the adhesive structure of the present embodiment is suitably produced using the surface treatment agent of the present embodiment described above.

Specific examples of the first vulcanized rubber and the second vulcanized rubber are the same as described.

From the same point of view as described in the section of the production method of the present embodiment, the first vulcanized rubber and the second vulcanized rubber preferably have a concentration of the aromatic secondary amine-based age resistor of 1 % by mass or less in a region of a depth of 10 µm from the surface in contact with the adhesive layer.

The urethane compound and/or an epoxy compound contained in the adhesive layer can be derived from a urethane-based adhesive and/or an epoxy-based adhesive as an adhesive.

The words that "the surface of the vulcanized rubber is chlorinated" mean that a rubber molecule present on the surface of the vulcanized rubber has a chlorine group.

In the adhesive structure of the present embodiment, the chlorine group is preferably bonded to a carbon atom that forms a rubber molecule present on the surface of the vulcanized rubber.

In the first vulcanized rubber and the second vulcanized rubber, a rubber molecule present on the surface that is in contact with the adhesive layer preferably has a hydroxyl group. The hydroxyl group is more preferably bonded to a carbon atom that forms a rubber molecule present on the surface of the vulcanized rubber.

All of the above-described embodiments can be achieved by applying an aqueous solution of hypochlorous acid to the predetermined surface of the vulcanized rubber, for example.

### (Tire)

A tire of one embodiment of the present disclosure is provided with the adhesive structure of the present embodiment described above. Because the tire of the present embodiment uses the adhesive structure, it has excellent fatigue resistance. The portion in which the adhesive structure is used in the tire is not particularly limited, and it can be appropriately selected according to the purpose.

### EXAMPLES

The following describes the present disclosure in more detail with reference to examples, but the present disclosure is not limited to the following examples.

### (Preparation of vulcanized rubber)

The compositions listed in Tables 1 and 2 were sufficiently kneaded to prepare unvulcanized rubber compositions. The rubber composition was vulcanized into a predetermined sheet shape at 165 °C for 10 minutes to prepare a pair of vulcanized rubber sheets (first and second vulcanized rubber sheets). Note that the first and second vulcanized rubber sheets used in each example are substantially the same, and they are referred to as "first" and "second", respectively, for the sake of convenience.

### (Preparation of surface treatment agent)

Sodium hypochlorite (manufactured by Tokyo Chemical Industry Co., Ltd. (TCI)) was dissolved in water and hydrochloric acid (manufactured by Tokyo Chemical Industry Co., Ltd. (TCI)) was appropriately added to prepare aqueous solutions of hypochlorous acid (surface treatment agent), where the effective chlorine concentration and the pH were as listed in Tables 1 and 2. In Comparative Example 1, an ethyl acetate solution of 4 % trichloroisocyanuric acid (manufactured by LORD) was prepared as a surface treatment agent, instead of an aqueous solution of hypochlorous acid.

The effective chlorine concentration was measured using a residual chlorine measuring instrument manufactured by Kyowa Pure Chemical Industries Co., Ltd., and the pH was measured using "Calmemo" manufactured by DKK-TOA CORPORATION.

### (Preparation of adhesive structure)

The first vulcanized rubber sheet and the second vulcanized rubber sheet were immersed in the surface treatment agent for one minute to perform surface treatment. After the immersion, excess liquid adhering to the surface of the first vulcanized rubber sheet was wiped off, and then the adhesive listed in Tables 1 and 2 was applied to the surface of the first vulcanized rubber sheet using a masking tape with a thickness of 100 µm as a spacer (applied at a thickness of 100 µm). Next, the applied surface of the first vulcanized rubber sheet was turned upward, and the second vulcanized rubber sheet was placed on the applied surface. Further, a weight was placed thereon to apply pressure to the sheets, and the sheets were left at room temperature for 4 days. In this way, an adhesive structure was prepared in which the adhesive was sandwiched between the first vulcanized rubber sheet and the second vulcanized rubber sheet.

For the measurement of peel force, which will be described later, first and second vulcanized rubber sheets each having a length of 60 mm, a width of 30 mm, and a thickness of 5 mm were used to prepare an adhesive structure as described above.

For the evaluation of fatigue resistance, which will be described later, first and second vulcanized rubber sheets each having a length of 50 mm, a width of 10 mm, and a thickness of 5 mm were used, where the two sheets were shifted lengthwise from each other by 10 mm to form a handle part, to prepare an adhesive structure as described above.

### (Measurement of peel force)

The adhesive structure prepared in each example was subjected to a T-shaped peeling test at a tensile speed of 500 mm/min using a universal testing machine manufactured by INSTRON to measure the peel force (N/25 mm). The results are listed in Tables 1 and 2.

When the peel force is 150 N/25 mm or more, especially when it is 220 N/25 mm or more, it can be recognized that the adhesion is good.

### (Evaluation of fatigue resistance)

The handle part of the adhesive structure prepared in each example was chucked, and 50 % strain was applied in the longitudinal direction under conditions of a frequency of 6 Hz and an ambient temperature of 60 °C. Further, the number of inputs of strain required for the occurrence of a crack of 1 mm was measured. The number of inputs in each example was indexed with the number of inputs in Comparative Example 1 being 100. The results are listed in Tables 1 and 2. A larger index value indicates better fatigue resistance.

Note that in the examples where the measured value of the peel force was less than 150 N/25 mm, the fatigue resistance could not be evaluated because the sheet easily peeled off.

**Table 1**

| | | | | Comparative Example 1 | Example 1 | Comparative Example 2 | Example 2 | Example 3 | Comparative Example 3 | Example 4 | Example 5 | Example 6 | Example 7 | Example 8 | Example 9 | Comparative Example 4 |
|---|---|---|---|---|---|---|---|---|---|---|---|---|---|---|---|---|
| | Vulcanized rubber | Natural rubber | Part by mass | 100 | 100 | 100 | 100 | 100 | 100 | 100 | 100 | 100 | 100 | 100 | 100 | 100 |
| | | Carbon black *1 | | 50 | 50 | 50 | 50 | 50 | 50 | 50 | 50 | 50 | 50 | 50 | 50 | 50 |
| | | Sulfur | | 2 | 2 | 2 | 2 | 2 | 2 | 2 | 2 | 2 | 2 | 2 | 2 | 2 |
| | | Vulcanization accelerator *2 | | 1 | 1 | 1 | 1 | 1 | 1 | 1 | 1 | 1 | 1 | 1 | 1 | 1 |
| | | Age resistor *3 | | 0 | 0 | 0 | 0 | 0 | 0 | 0 | 0 | 0.5 | 1 | 0 | 0 | 0 |
| | | | mass% | 0 | 0 | 0 | 0 | 0 | 0 | 0 | 0 | 0.3 | 0.6 | 0 | 0 | 0 |
| Adhesive structure | Surface treatment agent | Effective chlorine concentration | ppm | *6 | 100 | 200 | 200 | 300 | 400 | 400 | 400 | 400 | 400 | 400 | 500 | 600 |
| | | pH | - | | 2 | 9.3 | 7 | 2 | 9.4 | 7 | 7 | 7 | 7 | 4 | 2 | 9.5 |
| | Adhesive | Urethane-based adhesive *4 | | ○ | ○ | ○ | ○ | ○ | ○ | ○ | | ○ | ○ | ○ | ○ | ○ |
| | | Epoxy-based adhesive *5 | | | | | | | | | ○ | | | | | |
| Evaluation | Peel force | | N/25mm | 410 | 450 | 20 | 310 | 500 | 10 | 310 | 332 | 305 | 232 | 700 | 780 | 23 |
| | Fatigue resistance | | Index | 100 | 330 | - | 311 | 293 | - | 348 | 371 | 351 | 231 | 324 | 266 | - |

**Table 2**

| | | | | Example 10 | Comparative Example 5 | Example 11 | Example 12 | Comparative Example 6 | Example 13 | Example 14 | Example 15 | Comparative Example 7 | Example 16 | Example 17 | Comparative Example 8 | Comparative Example 9 |
|---|---|---|---|---|---|---|---|---|---|---|---|---|---|---|---|---|
| | Vulcanized rubber | Natural rubber | Part by mass | 100 | 100 | 100 | 100 | 100 | 100 | 100 | 100 | 100 | 100 | 100 | 100 | 100 |
| | | Carbon black *1 | | 50 | 50 | 50 | 50 | 50 | 50 | 50 | 50 | 50 | 50 | 50 | 50 | 50 |
| | | Sulfur | | 2 | 2 | 2 | 2 | 2 | 2 | 2 | 2 | 2 | 2 | 2 | 2 | 2 |
| | | Vulcanization accelerator *2 | | 1 | 1 | 1 | 1 | 1 | 1 | 1 | 1 | 1 | 1 | 1 | 1 | 1 |
| | | Age resistor *3 | | 0 | 0 | 0 | 0 | 0 | 0 | 0 | 0 | 0 | 0 | 0 | 0 | 0 |
| | | | mass% | 0 | 0 | 0 | 0 | 0 | 0 | 0 | 0 | 0 | 0 | 0 | 0 | 0 |
| Adhesive structure | Surface treatment agent | Effective chlorine concentration | ppm | 600 | 1000 | 1000 | 3200 | 5000 | 5000 | 6400 | 6400 | 10000 | 10000 | 12800 | 25000 | 25000 |
| | | pH | - | 7 | 9.3 | 7 | 2 | 9.3 | 7 | 4 | 7 | 9.3 | 7 | 4 | 11.6 | 9.3 |
| | Adhesive | Urethane-based adhesive *4 | | ○ | ○ | ○ | ○ | ○ | ○ | ○ | ○ | ○ | ○ | ○ | ○ | ○ |
| | | Epoxy-based adhesive *5 | | | | | | | | | | | | | | |
| Evaluation | Peel force | | N/25mm | 450 | 10 | 504 | 420 | 110 | 540 | 650 | 470 | 40 | 530 | 870 | 160 | 200 |
| | Fatigue resistance | | Index | 301 | - | 296 | 203 | - | 270 | 251 | 262 | - | 260 | 219 | 120 | 175 |

| | | | | | | | | | | | | | | | | |
|---|---|---|---|---|---|---|---|---|---|---|---|---|---|---|---|---|
| *1 Carbon black: LS-HAF, iodine adsorption 87 mg/g, DBP 74 ml/100 g *2 Vulcanization accelerator: "NOCCELER CZ-G" manufactured by Ouchi Shinko Chemical Industrial Co., Ltd. *3 Age resistor: N-phenyl-N'-(1,3-dimethylbutyl)-p-phenylenediamine (aromatic secondary amine-based age resistor) *4 Urethane-based adhesive: "UM880" manufactured by CEMEDINE CO., LTD. *5 Epoxy-based adhesive: "Fusor" manufactured by LORD *6 Ethyl acetate solution of 4 % trichloroisocyanuric acid (manufactured by LORD) was used instead of aqueous solution of hypochlorous acid | | | | | | | | | | | | | | | | |

According to Tables 1 and 2, it is understood that an example using an aqueous solution of hypochlorous acid having a pH value of 2 or more and 7 or less and an effective chlorine concentration of 100 ppm or more and 13000 ppm or less as a vulcanized rubber surface treatment agent can obtain good fatigue resistance while achieving firm adhesion between vulcanized rubbers via an adhesive, compared to the comparative examples.

Further, it is understood from a comparison of Examples 4, 6, and 7 that, as the concentration of the predetermined age resistor in the first vulcanized rubber and the second vulcanized rubber decreases, both the peel force and the fatigue resistance improve.

### INDUSTRIAL APPLICABILITY

According to the present disclosure, it is possible to provide a vulcanized rubber surface treatment agent that enables firm adhesion between vulcanized rubbers without heating and has little effect on rubber deterioration.

Further, according to the present disclosure, it is possible to provide a method of producing an adhesive structure where an adhesive structure in which vulcanized rubbers are firmly adhered to each other can be produced without heating.

Furthermore, according to the present disclosure, it is possible to provide an adhesive structure with excellent fatigue resistance in which vulcanized rubbers are firmly adhered to each other, and a tire provided with the adhesive structure.

## Claims

1. Use of a vulcanized rubber surface treatment agent for adhering vulcanized rubbers to each other, the vulcanized rubber surface treatment agent being
an aqueous solution of hypochlorous acid having a pH value of 2 or more and 7 or less and an effective chlorine concentration of 100 ppm or more and 13000 ppm or less.

2. Use of a vulcanized rubber surface treatment agent according to claim 1, wherein the aqueous solution of hypochlorous acid has a pH value of 4 or more and 7 or less.

3. A method of producing an adhesive structure, which is a method for obtaining an adhesive structure in which a first vulcanized rubber and a second vulcanized rubber are adhered to each other, comprising
a first application process of applying an aqueous solution of hypochlorous acid having a pH value of 2 or more and 7 or less and an effective chlorine concentration of 100 ppm or more and 13000 ppm or less on a surface of the first vulcanized rubber,
a second application process of applying an adhesive to a surface of the aqueous solution of hypochlorous acid applied in the first application process, and
an adhesion process of adhering the first vulcanized rubber and the second vulcanized rubber to each other via the aqueous solution of hypochlorous acid applied in the first application process and the adhesive applied in the second application process.

4. The method of producing an adhesive structure according to claim 3, wherein the first vulcanized rubber and the second vulcanized rubber have a concentration of aromatic secondary amine-based age resistor of 1 % by mass or less in a region of a depth of 10 µm from a surface in contact with the adhesive.

5. The method of producing an adhesive structure according to claim 3 or 4, wherein the adhesive is either or both of a urethane-based adhesive and an epoxy-based adhesive.

6. An adhesive structure produced by the method according to any one of claims 3 to 5, in which a first vulcanized rubber and a second vulcanized rubber are adhered to each other via an adhesive layer, wherein
the adhesive layer contains either or both of a urethane compound and an epoxy compound, and
at least a part of surfaces of the first vulcanized rubber and the second vulcanized rubber that are in contact with the adhesive layer is chlorinated.

7. The adhesive structure according to claim 6, wherein in the first vulcanized rubber and the second vulcanized rubber, a rubber molecule present on a surface in contact with the adhesive layer has a hydroxyl group, and the hydroxyl group is bonded to a carbon atom that forms the rubber molecule.

8. The adhesive structure according to claim 6 or 7, wherein the first vulcanized rubber and the second vulcanized rubber have a concentration of aromatic secondary amine-based age resistor of 1 % by mass or less in a region of a depth of 10 µm from a surface in contact with the adhesive layer.

9. A tire comprising the adhesive structure according to any one of claims 6 to 8.

## Patentansprüche

1. Verwendung eines Oberflächenbehandlungsmittels für vulkanisierten Kautschuk zum Kleben von vulkanisierten Kautschuken aneinander, wobei das Oberflächenbehandlungsmittel für vulkanisierten Kautschuk Folgendes ist:
eine wässrige Lösung von hypochloriger Säure, die einen pH-Wert von 2 oder mehr und 7 oder weniger und eine wirksame Chlorkonzentration von 100 ppm oder mehr und 13 000 ppm oder weniger aufweist.

2. Verwendung eines Oberflächenbehandlungsmittels für vulkanisierten Kautschuk nach Anspruch 1, wobei die wässrige Lösung von hypochloriger Säure einen pH-Wert von 4 oder mehr und 7 oder weniger aufweist.

3. Verfahren zum Herstellen einer klebenden Struktur, das ein Verfahren zum Erhalten einer klebenden Struktur ist, bei der ein erster vulkanisierter Kautschuk und ein zweiter vulkanisierter Kautschuk aneinandergeklebt werden, Folgendes umfassend:
einen ersten Auftragsprozess des Auftragens einer wässrigen Lösung von hypochloriger Säure, die einen pH-Wert von 2 oder mehr und 7 oder weniger und eine wirksame Chlorkonzentration von 100 ppm oder mehr und 13 000 ppm oder weniger aufweist, auf eine Oberfläche des ersten vulkanisierten Kautschuks,
einen zweiten Auftragsprozess des Auftragens eines Klebstoffs auf eine Oberfläche der in dem ersten Auftragsprozess aufgetragenen wässrigen Lösung von hypochloriger Säure, und
einen Klebeprozess des Klebens des ersten vulkanisierten Kautschuks und des zweiten vulkanisierten Kautschuks aneinander über die in dem ersten Auftragsprozess aufgetragene wässrige Lösung von hypochloriger Säure und den in dem zweiten Auftragsprozess aufgetragenen Klebstoff.

4. Verfahren zum Herstellen einer klebenden Struktur nach Anspruch 3, wobei der erste vulkanisierte Kautschuk und der zweite vulkanisierte Kautschuk eine Konzentration eines aromatischen sekundären aminbasierten Alterungsschutzmittels von 1 Masse-% oder weniger in einem Bereich einer Tiefe von 10 µm von einer Oberfläche in Kontakt mit dem Klebstoff aufweisen.

5. Verfahren zum Herstellen einer klebenden Struktur nach Anspruch 3 oder 4, wobei der Klebstoff eines oder beides von einem urethanbasierten Klebstoff und einem epoxidbasierten Klebstoff ist.

6. Klebende Struktur, die durch das Verfahren nach einem der Ansprüche 3 bis 5 hergestellt ist, bei der ein erster vulkanisierter Kautschuk und ein zweiter vulkanisierter Kautschuk über eine Klebstoffschicht aneinandergeklebt werden, wobei
die Klebstoffschicht eines oder beides von einer Urethanverbindung und einer Epoxidverbindung enthält, und
mindestens ein Teil von Oberflächen des ersten vulkanisierten Kautschuks und des zweiten vulkanisierten Kautschuks, die in Kontakt mit der Klebstoffschicht stehen, chloriert ist.

7. Klebende Struktur nach Anspruch 6, wobei in dem ersten vulkanisierten Kautschuk und dem zweiten vulkanisierten Kautschuk ein Kautschukmolekül, das auf einer Oberfläche in Kontakt mit der Klebstoffschicht vorhanden ist, eine Hydroxylgruppe aufweist, und die Hydroxylgruppe an ein Kohlenstoffatom gebunden ist, welches das Kautschukmolekül bildet.

8. Klebende Struktur nach Anspruch 6 oder 7, wobei der erste vulkanisierte Kautschuk und der zweite vulkanisierte Kautschuk eine Konzentration eines aromatischen sekundären aminbasierten Alterungsschutzmittels von 1 Masse-% oder weniger in einem Bereich einer Tiefe von 10 µm von einer Oberfläche in Kontakt mit der Klebstoffschicht aufweisen.

9. Reifen, der die klebende Struktur nach einem der Ansprüche 6 bis 8 umfasst.

## Revendications

1. Utilisation d'un agent de traitement de surface de caoutchouc vulcanisé pour faire adhérer des caoutchoucs vulcanisés l'un à l'autre, l'agent de traitement de surface de caoutchouc vulcanisé étant
une solution aqueuse d'acide hypochloreux ayant une valeur pH de 2 ou plus et de 7 ou moins et une concentration efficace en chlore de 100 ppm ou plus et de 13 000 ppm ou moins.

2. Utilisation d'un agent de traitement de surface de caoutchouc vulcanisé selon la revendication 1, dans laquelle la solution aqueuse d'acide hypochloreux a une valeur pH de 4 ou plus et de 7 ou moins.

3. Procédé de production d'une structure adhésive, qui est un procédé d'obtention d'une structure adhésive, dans lequel un premier caoutchouc vulcanisé et un deuxième caoutchouc vulcanisé sont adhérés l'un à l'autre, comprenant :
un premier processus d'application consistant à appliquer une solution aqueuse d'acide hypochloreux ayant une valeur pH de 2 ou plus et de 7 ou moins et une concentration efficace en chlore de 100 ppm ou plus et de 13 000 ppm ou moins sur une surface du premier caoutchouc vulcanisé ;
un deuxième processus d'application consistant à appliquer un adhésif sur une surface de la solution aqueuse d'acide hypochloreux appliquée lors du premier processus d'application ; et
un processus d'adhésion consistant à faire adhérer le premier caoutchouc vulcanisé et le deuxième caoutchouc vulcanisé l'un à l'autre *via* la solution aqueuse d'acide hypochloreux appliquée lors du premier processus d'application et l'adhésif appliqué lors du deuxième processus d'application.

4. Procédé de production d'une structure adhésive selon la revendication 3, dans lequel le premier caoutchouc vulcanisé et le deuxième caoutchouc vulcanisé ont une concentration en antioxygène à base d'amine secondaire aromatique de 1 % en masse ou moins dans une région d'une profondeur de 10 µm à partir d'une surface en contact avec l'adhésif.

5. Procédé de production d'une structure adhésive selon la revendication 3 ou 4, dans lequel l'adhésif est soit l'un soit les deux d'un adhésif à base d'uréthane et d'un adhésif à base d'époxyde.

6. Structure adhésive produite par le procédé selon l'une quelconque des revendications 3 à 5, dans laquelle un premier caoutchouc vulcanisé et un deuxième caoutchouc vulcanisé sont adhérés l'un à l'autre *via* une couche adhésive, dans laquelle
la couche adhésive contient l'un ou les deux d'un composé d'uréthane et d'un composé époxyde ; et
au moins une partie de surfaces du premier caoutchouc vulcanisé et du deuxième caoutchouc vulcanisé, qui sont en contact avec la couche adhésive, est chlorée.

7. Structure adhésive selon la revendication 6, dans laquelle, dans le premier caoutchouc vulcanisé et le deuxième caoutchouc vulcanisé, une molécule de caoutchouc présente sur une surface en contact avec la couche adhésive comporte un groupe hydroxyle, et le groupe hydroxyle est lié à un atome de carbone qui forme la molécule de caoutchouc.

8. Structure adhésive selon la revendication 6 ou 7, dans laquelle le premier caoutchouc vulcanisé et le deuxième caoutchouc vulcanisé ont une concentration en antioxygène à base d'amine aromatique secondaire de 1 % en masse ou moins dans une région d'une profondeur de 10 µm à partir d'une surface en contact avec la couche adhésive.

9. Pneumatique, comprenant la structure adhésive selon l'une quelconque des revendications 6 à 8.
